# DEMANDE DE BREVET EUROPEEN

(11) **EP 1 253 067 A1**
(43) Date de publication de la demande: **30.10.2002**
(21) Numéro de dépôt: 02290980.8
(22) Date de dépôt: 18.04.2002
(51) Int. Cl.: B62D 21/17, B62D 25/20

(54) **Dispositif de renfort de tunnel**

(30) Priorité: 27.04.2001 FR 0105756
(71) Demandeur: Renault s.a.s., 92100 Boulogne Billancourt (FR)
(72) Inventeur: Gros, Christian, 78400 Chatou (FR)

(57) **Abrégé**

Le dispositif de renfort de tunnel pour plancher de carrosserie de véhicule automobile comprend un premier profilé 5 ayant une forme adaptée à la paroi intérieure du tunnel 1 et comprenant ouverture 9 pour recevoir des canalisations ou des câbles. Le profilé posséde au moins une surface plane s'étendant sensiblement dans le plan du plancher 13, 14. La forme ouverte du profilé permet le passage de câble et de canalisations, tout en conservant un montage aisé de l'ensemble dans ledit tunnel 1.

## Description

La présente invention concerne un dispositif de renfort de tunnel plus particulièrement destiné au passage de câbles et de canalisations dans un véhicule automobile.

L'architecture des véhicules automobiles impose souvent la disposition de câbles et de canalisations entre l'avant du véhicule et l'arrière du véhicule, qui permettent d'actionner un élément disposé à l'arrière du véhicule, ou la circulation du liquide de freinage, du liquide de refroidissement, des gaz d'échappement par exemple. Ces canalisations sont généralement intégrées dans un tunnel constitué par une nervure allongée du plancher de la carrosserie, situé le plus souvent entre les traverses de siège , les canalisations sont maintenues par des dispositifs de fixation.

On connaît par le document FR 2 733 816 (MCC) un dispositif de fixation de câbles et canalisation dans un tunnel pratiqué dans l'architecture d'un véhicule automobile. Ce dispositif permet un assemblage rapide d'un ensemble de canalisations liées de façon juxtaposée par des entretoises flexibles. Deux entretoises situées aux extrémités sont munies de moyens de fixation qui permettent de les fixer ensemble. On dispose alors les canalisations en deux rangées superposées. On soude ensuite, sur les canalisations ou les entretoises, des moyens de fixation rapide. Ces moyens de fixation permettent de fixer l'ensemble des canalisations dans le tunnel en une opération. On dispose également des éléments d'appui latéraux dans le tunnel, afin de maintenir les canalisations et d'éviter tout mouvement qui pourrait entraîner des chocs entre les canalisations et les parois du tunnel.

Ce dispositif est composé d'éléments multiples, fastidieux à assembler et à fabriquer. De plus, il n'immobilise pas complètement les canalisations, ce qui peut entraîner l'endommagement de celles-ci.

On sait par ailleurs qu'il est nécessaire de rigidifier le tunnel d'un plancher de véhicule automobile. Cette rigidité est généralement obtenue au moyen de pièces de renfort montées dans le tunnel et de façon à répartir les efforts et éviter des déformations gênantes.

L'invention a pour objet un dispositif capable de renforcer un tunnel de plancher, et qui assure en outre la fonction de support pour des câbles et des canalisations, tout en protègeant au moins en partie lesdits câbles et canalisations.

L'invention a également pour objet un dispositif permettant un montage rapide de l'ensemble des câbles et des canalisations à l'interieur du tunnel de plancher.

L'invention a enfin pour objet un dispositif de renfort de tunnel dont la fabrication soit simple et économique.

Le dispositif de renfort de tunnel pour plancher de carrosserie de véhicule automobile, selon l'invention, comprend un premier profilé ayant une forme adaptée à la paroi intérieure du tunnel et comprenant une ouverture pour recevoir des canalisations ou des gaines de câbles. Le profilé posséde au moins une surface plane s'étendant sensiblement dans le plan du plancher. La forme ouverte du profilé permet le passage de câbles et de canalisations, tout en autorisant un montage aisé de l'ensemble dans ledit tunnel.

Avantageusement, le profilé comprend une pluralité de logements capables recevoir des canalisations ou des gaines de câbles en partie introduits dans lesdits logements.

Dans un mode de réalisation, le dispositif comprend un second profilé coopérant avec le premier profilé pour réaliser une forme fermée capable de recevoir des canalisations ou des câbles. L'obtention d'une forme fermée permet de protéger les câbles et canalisations, et de compléter la structure du premier profilé à l'aide du second, ce qui augmente la rigidité du dispositif de renfort.

Avantageusement, le second profilé comprend une pluralité de logements capables recevoir des canalisations ou des gaines de câbles en partie introduites dans lesdits logements.

Dans un mode de réalisation, des logements des profilés sont définis par des nervures en saillie.

Dans un mode de réalisation, des logements des profilés sont définis par des gorges de section semi-circulaire.

Dans un mode de réalisation, des logements des profilés appuient sur des portions opposées des canalisations.

De préférence chaque profilé est obtenu par extrusion d'un alliage d'aluminium ou d'un matériau synthétique de rigidité approprié.

Avantageusement, plusieurs dispositifs de renfort de tunnel sont fixés dans le tunnel par collage, ou soudage, en plusieurs endroits de la longueur du tunnel.

La présente invention et ses avantages seront mieux compris à l'étude de la description détaillée de deux modes de réalisation pris à titre d'exemples non limitatifs, et illustrés par les dessins annexés sur lesquels
La figure 1 est une vue en coupe transversale d'un dispositif de renfort selon un aspect de l'invention, disposé dans un tunnel ;
La figure 2 est une vue de côté du dispositif de renfort de la figure 1 montré en dehors du tunnel ; et
La figure 3 est une vue en coupe transversale analogue à la figure 1 d'une variante d'un dispositif de renfort selon l'invention.

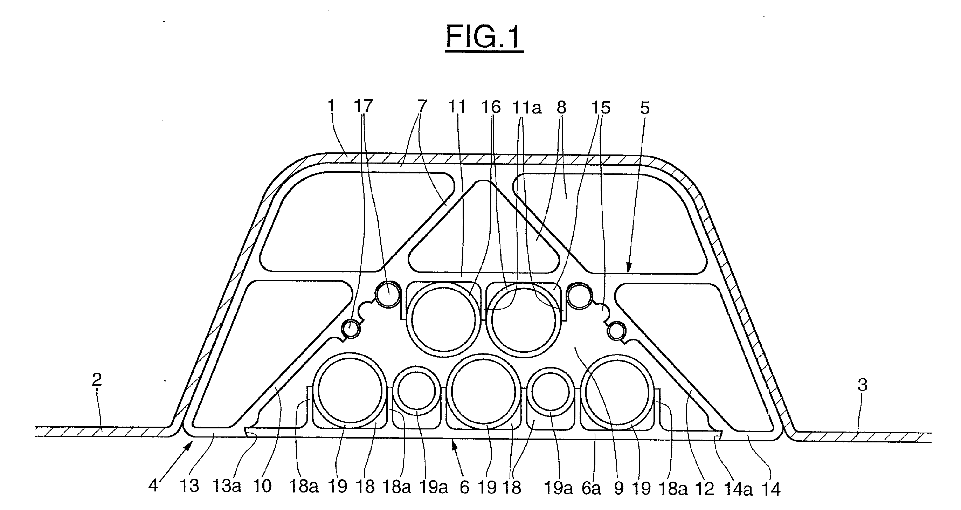

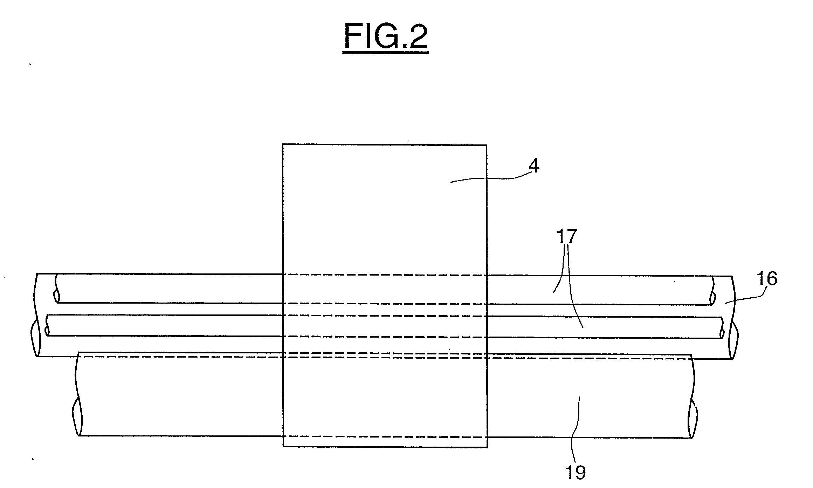

Tel qu'il est illustré sur les figures 1 et 2, un dispositif de renfort de tunnel selon un aspect de l'invention est disposé dans un tunnel 1 constitué sous la forme d'une nervure pratiquée entre deux parties latérales 2 et 3 disposées dans un même plan et constituant par exemple le plancher d'un véhicule automobile. Le tunnel 1 de section trapézoïdale s'étend dans un plan perpendiculaire au plan de la figure 1. Le fond du tunnel 1 est la base de plus petite longueur de la section trapézoïdale.

Un renfort de tunnel référencé 4 dans son ensemble, disposé dans le tunnel 1, comprend une pièce de renfort 5 de forme ouverte possèdant, du côté du tunnel 1, une forme concordante avec le tunnel 1, et une pièce de fermeture 6. Le renfort de tunnel 4 s'étend axialement dans le tunnel 1 sur une longueur limitée comme on le voit sur la figure 2.

La pièce de renfort 5 possède une structure du type alvéolée, c'est-à-dire que la pièce de renfort 5 est composé de parois 7 orientées de façon différentes, définissant une pluralité d'alvéoles 8 dont la structure d'ensemble permet d'obtenir une structure rigide et une bonne répartition des efforts. Ce type de structure présente l'avantage d'offrir une grande rigidité, tout en allégeant la structure. La pièce de renfort 5 comprend une ouverture 9 de forme trapézoïdale, dirigée du côté opposé au tunnel 1, et comprenant trois surfaces 10, 11 et 12.

La pièce de renfort 5 comprend deux surfaces 13 et 14 adjacentes respectivement aux parties latérales 2 et qui s'étendent sensiblement dans le plan du plancher défini par les parties latérales 2 et 3, jusqu'aux extrémités inférieures des parois respectives 10 et 12 de l'ouverture 9. La pièce de fermeture 6 comprend une paroi plane 6a, qui vient fermer l'ouverture 9 sensiblement dans le plan du plancher défini par les parties latérales 2 et 3. La pièce de renfort 5 et la pièce de fermeture 6 sont assemblées entre elles, par exemple par encliquetage en 13a et 14a

Les parois 10, 11, et 12 de l'ouverture 9 comprennent des logements 15 de taille variable où peuvent être fixés, par exemple par serrage périphérique, des canalisations 16 de divers diamètres ou des gaines de câbles 17 également de divers diamètres. D'une manière plusprécise, la paroi 11 comporte des nervures 11a s'étendant perpendiculairement à la paroi 11 et au plan de la figure, définissant les logements 15 de taille adaptée aux canalisations 16. Les parois 10 et 12 comportent quant à elles des gorges de section semi-circulaire, perpendicualires au plan de la figure 1, définissant les logements 15 adaptés au diamètre des gaines de câbles 17.

On notera que les dimensions des logements 15 sont telles que les canalisations 16 et les gaines de câble 17 pénètrent dans les logements 15 en étant enserrées par les bords desdits logements dont l'écartement peut être légèrement inférieur au diamètre de la canalisation ou de la gaine de câble correspondante. Les canalisations 16 et les gaines 17 pénètrent jusqu'au fond des logements 15 et se trouvent ainsi parfaitement fixées.

La pièce de fermeture 6 comprend, du côté de l'ouverture 9, des logements 18 de taille variable, formés entre des nervures 18a qui s'étendent perpendiculairement à la paroi plane 6a et au plan de la figure 1. Des canalisations 19 et 19a peuvent être fixées par serrage entre les nervures 18a, dans les logements 18. Le serrage se fait de la même manière que pour les canalisations 16 fixées sur la paroi 11. On a représenté également deux canalisations 19a de diamètre inférieur à celui des canalisations 19. Les canalisations 19a sont fixées par serrage entre deux nervures 18a, mais ne pénètrent pas jusqu'au fond des logements 18. Les nervures 18a augmentent la rigidité de la pièce de renfort 6. On comprendra bien entendu que la disposition des canalisations 16, 19, 19a et des gaines 17 illustrée sur la figure 1 peut être modifiée selon les applications.

Les parois 7, 10, 11, 12, 13 et 14 de la pièce de renfort 5 sont agencées de façon à répartir convenablement les efforts. Par exemple, les surfaces 13 et 14 permettent de reprendre les efforts latéraux exercés sur le tunnel 1 au niveau des parties latérales 2 et 3, et de les transmettre à l'ensemble de la structure de la pièce de renfort 5 par l'intermédiaire des parois 10 et 12. La pièce de fermeture 6 s'étendant sensiblement entre les surfaces 13 et 14 vient compléter la structure alvéolée de la pièce de renfort 5 en fermant l'ouverture 9 et en composant une forme fermée avec la pièce de renfort 5. La pièce de fermeture 6 transmet les efforts transversaux de la surface 13 vers la surface 14 et réciproquement, pour augmenter la rigidité du renfort de tunnel 4 dans son ensemble. Toutes les canalisations 16 et gaines de câble 17 se trouvent fixées et logées à l'interieur de l'ouverture 9, refermée par la pièce de fermeture 6. L'ensemble est ainsi parfaitement maintenu et le tunnel est quant à lui convenablement renforcé.

Le montage de l'ensemble des canalisations 16, des gaines de câbles 17 et du renfort de tunnel peut être réalisée de différentes façons. Selon une première variante, on peut commencer par fixer la pièce de renfort 5 dans le tunnel, par soudage, par collage ou tout autre procédé. Ensuite, on peut monter les canalisations 16 et les gaines 17 qui sont fixées par serrage sur les parois 10, 11 et 12 de l'ouverture 9 de la pièce de renfort 5. On monte ensuite les canalisations 19 et 19a sur la pièce de fermeture 6, puis on fixe la pièce de fermeture 6 sur la pièce de renfort 5 par encliquetage.

Selon une seconde variante, on peut fixer les canalisations 16, 19, 19a et les gaines 17 dans les logements 15 de la pièce de renfort 5 et de la pièce de fermeture 6, puis fixer la pièce de fermeture 6 sur la pièce de renfort 5, et finalement fixer l'ensemble du renfort 4 dans le tunnel 1.

Le renfort de tunnel 4 s'étend dans le tunnel 1 sur une longueur limitée des canalisations. Il est disposé en un endroit adéquat du tunnel afin de remplir au mieux sa fonction de rigidification, par exemple au niveau de la banquette arrière du véhicule. Plusieurs renforts de tunnel 4 sont disposés dans le même tunnel, de façon distante.

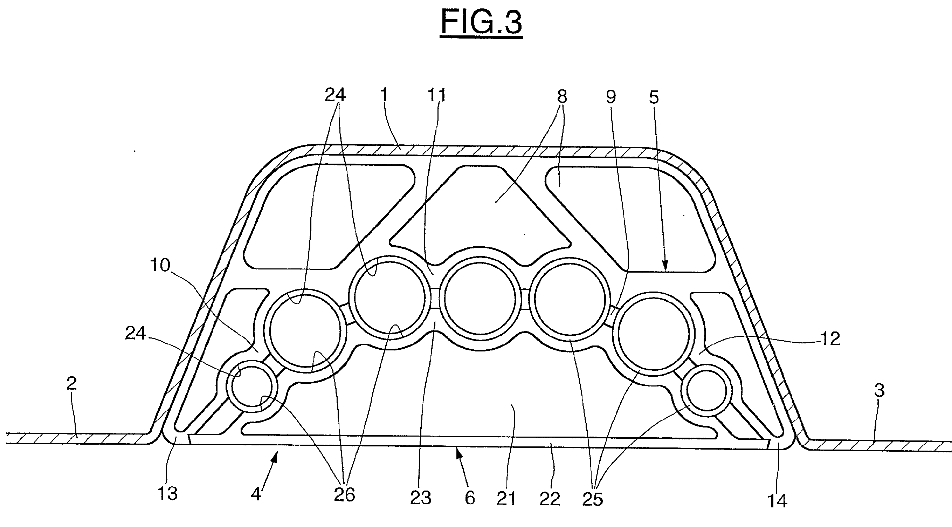

La figure 3, sur laquelle les éléments analogues portent les mêmes références, illustre un second mode de réalisation, dans lequel la pièce de fermeture 6 comprend une alvéole 21, présentant une surface plane 22 qui s'étend sensiblement dans le plan défini par les parties latérales 2 et 3, entre les surfaces 13 et 14, et une surface 23 en regard des surfaces 10, 11 et 12 de l'ouverture 9. Les surfaces 10, 11 et 12 comprennent des logements 24 destinés à recevoir des canalisations 25 de différents diamètres. La paroi 23 comprend des logements 26 dipsosés en regard des logements 24. Les logements 24 et 26 sont constitués sous la forme de gorges de section semi circulaire, capables de recevoir une partie de la périphérie des canaliations 25.

Dans ce mode de réalisation, la fixation de la pièce de fermeture 6 sur la pièce de renfort 5 permet de mettre en appui les logements 24 de la pièce de renfort 5 d'une part et les logements 26 de la pièce de fermeture 6 d'autre part, sur des portions périphériques opposées des canalistations 25. Les canalisations sont ainsi maintenues entre la pièce de renfort 5 et la pièce de fermeture 6, fixées entre elles par encliquetage. Bien entendu, certaines canalisations pourraient être remplacées par des gaines de câble, les logmeents 24, 26 étant dimensionés en conséquence.

En variante, on peut envisager que les profilés 5 et 6 ne comprennent pas de logements spécifiques dans lesquels sont introduites les canalisations 16, 19, 19a et les gaines 17 de câbles. La pièce 6 venant fermer l'ouverture 9 permet encore de compléter la structure de la partie de renfort 5, tout en facilitant l'introduction le passage 16, 19 ,19a et des gaines 17. Les dimensions de l'ouverture 9 pourront être adaptées aux canalisations 16, 19, 19a et aux gaines 17.

Les pièces 5 et 6 du renfort de tunnel 4 peuvent facilement être obtenues sous la forme de profilés à l'issu d'un procédé de fabrication, par extrusion par exemple. Ce procédé de fabrication est rapide et économique, et permet d'obtenir des renforts de tunnel 4 en un minimum d'opérations de fabrication. Les renforts de tunnel peuvent être montés facilement et rapidement puisque les deux pièces qui les constituent peuvent être simplement fixées par encliquetage.

Le dispositif de renfort de tunnel selon l'invention permet donc d'obtenir un renfort de tunnel rigide, dont le procédé de fabrication est économique, et qui remplit en plus la fonction de support pour des câbles et/ou des canalisations. La structure du renfort de tunnel alvéolée est adaptée pour permettre la rigidification du tunnel, et le passage de ces canalisations. La pièce de fermeture 6 qui est fixée pendant le montage des canalisations permet à la fois de compléter la structure alvéolée en fermant la forme ouverte de la pièce de renfort, et de supporter les câbles et/ou canalisations.

## Revendications

1. Dispositif de renfort de tunnel pour plancher de carrosserie de véhicule automobile **caractérisé par le fait qu'**il comprend un premier profilé (5) ayant une forme adaptée à la paroi intérieure du tunnel (1) et comprenant ouverture (9) pour recevoir des canalisations ou des câbles, le profilé (5) possédant au moins une surface plane (13, 14) s'étendant sensiblement dans le plan du plancher.

2. Dispositif selon la revendication 1, **caractérisé par le fait que** le profilé (5) comprend une pluralité de logement (15) capables de recevoir des canalisations ou des câbles en partie introduits dans lesdits logements (15).

3. Dispositif selon l'une quelconque des revendications 1 ou 2, **caractérisé par le fait qu'**il comprend un second profilé (6) coopérant avec le premier profilé (5) pour réaliser une forme fermée capable de recevoir des canalisations ou des câbles.

4. Dispositif selon la revendication 3, **caractérisé par le fait que** le second profilé (6) se fixe sur le premier profilé (5) par encliquetage.

5. Dispositif selon l'une quelconque des revendications 3 ou 4, **caractérisé par le fait que** les profilés (6) comprend une pluralité de logements (18) capables de recevoir des canalisations ou des gaines de câbles en partie introduits dans lesdits logements (18).

6. Dispositif selon l'une quelconque des revendications 2 à 5, **caractérisé par le fait que** des logements des profilés (5, 6) sont définis par des nervures (18a) en saillie.

7. Dispositif selon l'une quelconque des revendications 2 à 6, **caractérisé par le fait que** des logements des profilés (5, 6) sont définis par des gorges de section semi-circulaire.

8. Dispositif selon l'une quelconque des revendications 3 à 7 **caractérisé par le fait que** des logements (24, 26) des profilés (5, 6) appuient sur des portions opposées des canalisations.

9. Dispositif selon l'une quelconque des revendications précédentes **caractérisé par le fait que** chaque profilé (5, 6) est obtenu par extrusion.

10. Dispositif selon l'une quelconque des revendications précédentes, **caractérisé par le fait que** le renfort de tunnel (4) est fixé dans le tunnel (1) par collage.
